# FASCICULE DE BREVET EUROPEEN

(11) **EP 3 141 876 B1**
(45) Date de publication et mention de la délivrance du brevet: **18.12.2019**
(21) Numéro de dépôt: 16187899.6
(22) Date de dépôt: 08.09.2016
(51) Int. Cl.: G01J 1/42

(54) **PROCÉDÉ DE RELEVÉ DE DONNÉES PHOTOMÉTRIQUES DE PRÉCISION AMÉLIORÉE**
VERFAHREN ZUR ERHEBUNG VON FOTOMETRISCHEN DATEN MIT VERBESSERTER PRÄZISION
METHOD FOR READING PHOTOMETRIC DATA WITH ENHANCED ACCURACY

(30) Priorité: 11.09.2015 FR 1558484
(43) Date de publication de la demande: 15.03.2017
(73) Titulaire: Bouygues Energies et Services, 78180 Montigny le Bretonneux (FR)
(72) Inventeur: DAEL, Clémence, 78000 Versailles (FR); HORTON, Franck, 77850 Héricy (FR); LEBRET, Jean, 77210 Avon (FR)
(74) Mandataire: Regimbeau

(56) Documents cités:
- WO-A1-90/03094
- FR-A1- 2 976 662

## Description

### DOMAINE DE L'INVENTION

L'invention concerne un procédé de relevé de données photométriques. L'invention s'applique en particulier à la vérification du respect, par une installation d'éclairage public dans un site, de normes en vigueur dans ce domaine, en évaluant l'éclairement fourni au site par cette installation.

### ETAT DE LA TECHNIQUE

Des normes existent prescrivant des valeurs d'éclairement d'une chaussée par un éclairage public, que ce soit en milieu urbain ou rural. C'est par exemple le cas de la norme européenne EN13201-2.

Pour effectuer le diagnostic photométrique d'une installation d'éclairage urbain, afin de vérifier que l'éclairage de la chaussée permis par cette installation satisfait aux exigences des normes en vigueur, il est connu de déplacer, dans le site couvert par l'installation d'éclairage, un système de relevé de données photométriques pourvu de capteurs.

Un système de relevé de données photométriques couramment utilisé est un véhicule sur lequel sont montés des capteurs d'éclairement, ainsi qu'un odomètre ou un système de géopositionnement.

Un tel système est connu par le document FR-A-2 976 662 ou par le document WO 90/03094.

Afin d'effectuer le diagnostic photométrique, le système de relevé de données photométriques est déplacé le long d'une trajectoire, et des mesures d'éclairement sont réalisées pour fournir une valeur moyenne d'éclairement par tronçon de voie. Un tronçon de voie est une portion de voie, par exemple routière, délimitée par deux intersections.

L'obtention d'une valeur moyenne d'éclairement par tronçon est classiquement réalisée en déclenchant, au début du tronçon parcouru par le système de relevé, les capteurs d'éclairement, et le cas échéant l'odomètre ou le système de géopositionnement, pour initier la mesure, et en arrêtant la mesure à l'issue du tronçon.

Les données d'éclairement acquises sur le tronçon sont ensuite moyennées et corrélées avec la position du tronçon, ou le déplacement du véhicule le long de ce tronçon, acquis par l'odomètre ou le système de positionnement.

Ce procédé de mesure présente l'inconvénient de manquer de précision. En effet, puisque seule la valeur moyenne de l'éclairement sur un tronçon est calculée à l'issue de la séquence d'acquisition, les résultats produits ne tiennent pas compte d'éventuels changements de parcours du véhicule par rapport au parcours prévu, consécutifs par exemple à un obstacle imprévu (travaux, voie fermée, etc.). Les résultats ne tiennent pas non plus compte de passages multiples du véhicule le long d'un même tronçon, que ce soit dans des sens différents ou identiques, ou de phases d'arrêt du véhicule lors de la mesure.

Les passages multiples ou les arrêts se traduisent par des biais sur la mesure qui ne sont pas détectables ou corrigeables.

### PRESENTATION DE L'INVENTION

L'invention a pour but de proposer un procédé de relevé de données photométriques ne présentant pas les inconvénients de l'art antérieur indiqués ci-avant.

En particulier, un but de l'invention est de présenter un procédé de relevé de données présentant des résultats plus précis que les procédés de l'art antérieur.

Un autre but de l'invention est de présenter un procédé qui permette de fournir les données photométriques tout le long du parcours effectué par le système, en tenant compte notamment des changements de parcours imprévus, des passages multiples sur un même tronçon et des phases d'arrêt du système de relevé de données lors de son déplacement pour la campagne d'acquisition de données.

A cet égard, l'invention a pour objet un procédé de relevé de données photométriques dans un site d'étude suivant la revendication 1. Les revendications 2 à 11 concernent des modes de réalisation du procédé.

L'invention a également pour objet un système de relevé de données photométriques, comprenant au moins un capteur d'éclairement, un système de géopositionnement et un processeur, le système étant caractérisé en ce qu'il est adapté pour mettre en oeuvre le procédé selon la description qui précède.

Le procédé de relevé de données proposé permet de réaliser des mesures très précises, en acquérant les données de position et d'éclairement à la fréquence d'échantillonnage des capteurs correspondants.

L'interpolation des données permet de mettre en correspondance les données de position avec les données d'éclairement, malgré une différence de fréquence d'échantillonnage avec les capteurs.

On peut ainsi obtenir, au lieu d'une moyenne par tronçon directement obtenue à l'issue de la période d'acquisition, une image précise de l'éclairement en chaque point du tronçon. Les données ainsi obtenues peuvent en outre être traitées, à partir des données de position du système de relevé de données, pour supprimer des données redondantes liées à des phases d'arrêt ou à des obstacles rencontrés par le système de relevé de données.

L'horodatage des données permet en outre de détecter les phases de déplacement lent du système de relevé de données, correspondant également à des données d'éclairement redondantes.

Le procédé proposé permet donc une mesure plus fiable et plus précise de l'éclairement dans un site et permet donc un meilleur diagnostic d'une installation d'éclairage.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente schématiquement un exemple de système de relevé de données photométriques,
- La figure 2 illustre les principales étapes du procédé de relevé de données photométriques,
- La figure 3a représente une matrice de pixels correspondants au site d'étude,
- La figure 3b représente l'attribution de valeurs d'éclairement par pixel,
- La figure 3c représente la matrice contenant uniquement les pixels présentant une valeur d'éclairement,
- Les figures 4a et 4b représentent la réalisation d'une moyenne d'éclairement par tronçon,
- La figure 5 représente un exemple de cartographie d'un site d'étude dans lequel une moyenne d'éclairement est attribuée à chaque tronçon.

### DESCRIPTION DETAILLEE D'AU MOINS UN MODE DE REALISATION DE L'INVENTION

### Système de relevé de données

Le procédé de relevé de données photométriques dans un site d'étude, par exemple pour effectuer un diagnostic photométrique du site, est mis en oeuvre au moyen d'un système de relevé de données 1, qui est déplacé sur des voies de déplacement du site.

Les voies sont typiquement des routes ou des rues. Il peut s'agir également de voies piétonnes, cyclables, de sentiers etc.

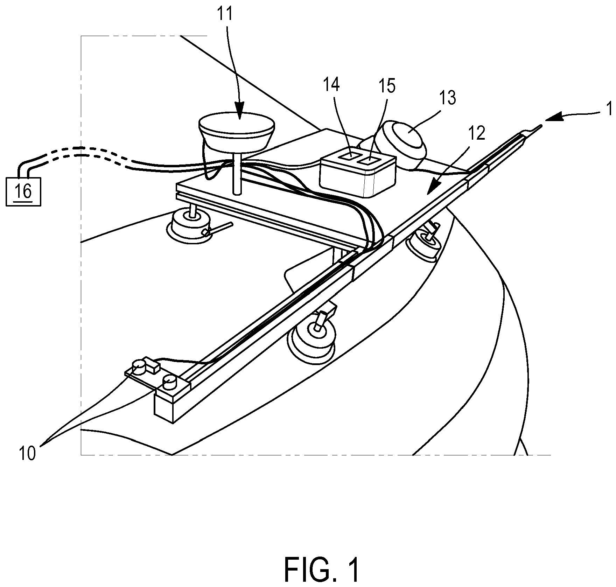

Un exemple non limitatif de système de relevé de données 1 est représenté sur la figure 1. Un tel système 1 comprend au moins un capteur d'éclairement 10, et de préférence plusieurs capteurs d'éclairement, par exemple des luxmètres. De préférence, le système 1 comprend au moins trois capteurs d'éclairement 10, et plus préférablement encore cinq capteurs d'éclairement 10. Ceci permet, en montant le système 1 sur le capot d'un véhicule, de disposer des capteurs d'éclairement en différents endroits d'une section transversale d'une voie.

Le système 1 comprend également un système de géopositionnement 11, de préférence par satellite, c'est-à-dire de type GPS.

En outre, le système 1 peut en outre comprendre un ou plusieurs autres capteurs, choisis parmi le groupe suivant :
- Un chromamètre 12,
- Une caméra 13,
- Un thermomètre 14,
- Un hygromètre 15.

Le système 1 peut avantageusement être monté sur un véhicule pour pouvoir être déplacé dans les voies du site d'étude et mettre en oeuvre le procédé de relevé de données.

En outre, le système 1 comporte une unité de traitement 16, comprenant typiquement un processeur et une mémoire (non représentés), adaptée pour communiquer avec les capteurs et le système de géopositionnement 11 pour les commander, et recevoir les données mesurées. L'unité de traitement peut également être adaptée pour traiter les données acquises afin d'établir le diagnostic photométrique.

Alternativement, une unité de traitement distincte peut être utilisée pour réaliser le traitement des données, de manière à minimiser les moyens de calculs embarqués dans le véhicule déplaçant le système de relevé 1. Dans la suite, on pourra néanmoins désigner par le terme générique d'« unité de traitement 16 » un système formé de deux unités de traitement disjointes, à savoir une unité présentant une fonction de commande et de mémoire, embarquée avec le reste du système dans le véhicule lors du déplacement, et une unité présentant une fonction de traitement des données, localisée sur un site de traitement des données distinct du véhicule.

Avantageusement, mais facultativement, le système de relevé de données 1 peut être conforme à celui décrit dans la demande de brevet non publiée FR1557476.

Les capteurs du système de relevé de données photométriques et le système de géopositionnement n'ont pas forcément tous les mêmes fréquences d'échantillonnage, ou « de réponse ». Ainsi par exemple, le système de géopositionnement 11 peut présenter une fréquence d'échantillonnage inférieure à celle des capteurs d'éclairement 10.

C'est le cas dans l'exemple utilisé dans la description qui suit. Le capteur d'éclairement présente une fréquence d'échantillonnage comprise entre 100 Hz et 1 kHz, par exemple égale à 100 Hz. Le système de géopositionnement présente une fréquence d'échantillonnage comprise entre 0,1 et 10 Hz, par exemple 1 Hz.

Le procédé décrit ci-après est néanmoins applicable dans d'autres cas, c'est-à-dire dans un cas général ou plusieurs capteurs (en incluant le système de géopositionnement) présentent des fréquences d'échantillonnages différentes, comprenant une fréquence maximale et une fréquence minimale.

### Procédé de relevé de données

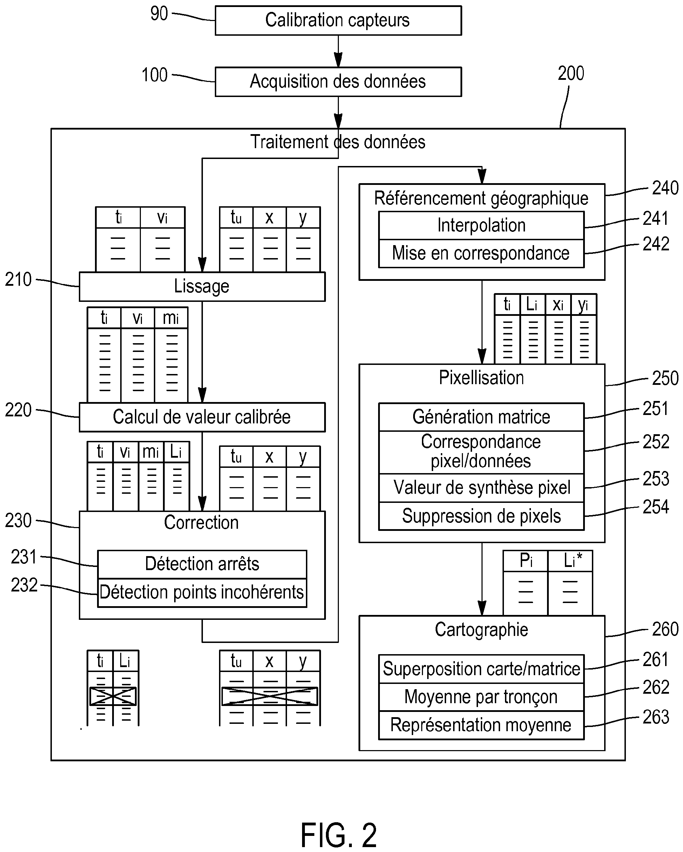

En référence à la figure 2, on a représenté les principales étapes d'un procédé de relevé de données mis en oeuvre avec un système 1 décrit précédemment.

Sur la figure, on a représenté en entrée et sortie de chaque étape l'état des données qui sont traitées, avec des notations qui sont reprises dans la description.

### Acquisition

Le procédé de relevé de données comprend une première étape 100 d'acquisition de données par les différents capteurs du système, notamment les capteurs d'éclairement 10, et par le système de géopositionnement 11.

Lors de cette étape 100, le système de relevé de données 1 est déplacé sur des voies du site d'étude. A cet égard, il est avantageusement monté sur un véhicule parcourant les voies.

Lors de ce déplacement, chaque capteur (y compris le système de géopositionnement) acquiert des données à une fréquence égale à sa fréquence d'échantillonnage. On note vᵢ le jeu de données obtenues par un capteur i, et (x,y) les positions mesurées par le système de géopositionnement 11.

De plus, lors de l'acquisition 100 des données, celles-ci sont horodatées, c'est-à-dire qu'à chaque donnée est associée un marquage temporel noté t. On note tᵢ le marquage temporel associé aux données acquises par le capteur i, et tᵤ celui associé aux données de position acquises par le système de géopositionnement.

Il résulte des différences dans les fréquences d'échantillonnage des capteurs un nombre différent de données relevées pour les différents capteurs et donc un marquage temporel différent entre les différents jeux de données.

En reprenant l'exemple d'un capteur d'éclairement 10 présentant une fréquence d'échantillonnage à 100 Hz, à l'issue de l'étape de mesure le capteur d'éclairement a mesuré n données. Si le système de géopositionnement présente une fréquence d'échantillonnage de 1 Hz, il a acquis N = n/100 positions à l'issue de l'étape de mesure.

### Traitement des données

Le procédé de relevé de données comprend ensuite une étape de traitement 200 des données acquises. Comme indiqué ci-avant, ce traitement peut être mis en oeuvre soit dans un processeur du système embarqué dans le véhicule, soit dans un processeur d'un site de traitement de données distant du véhicule, en post-traitement.

Le traitement 200 des données comprend de préférence une première étape 210 de lissage des données pour supprimer le bruit des mesures. Cette étape est avantageusement mise en oeuvre sur les données acquises par le ou les capteurs d'éclairement 10, et le cas échéant sur les données acquises par d'autres capteurs fonctionnant à haute fréquence, par exemple chromamètre, thermomètre, hygromètre. Le lissage des données est réalisé, par exemple, en calculant, pour un type de donnée acquise par un capteur, les moyennes glissantes de la donnée mesurée.

Pour une donnée *v*_{*i,j*₀} acquise par un capteur i, la moyenne glissante *m*_{*i,j*₀} correspondante est calculée par la moyenne de tous les *v_{i,j}* compris entre *v*_{*i,j*₀-*k*} et *v*_{*i,j*₀+*k*}, k étant un entier compris par exemple entre 10 et 100, par exemple compris entre 20 et 50. On note mᵢ la série de moyennes glissantes calculée pour la série de données vᵢ acquises par le capteur i.

Puis, le traitement 200 comprend une étape 220 de calcul, à partir des données brutes acquises par les capteurs d'éclairement 10 - éventuellement moyennées - des valeurs d'éclairement correspondantes, notées Lᵢ pour le capteur i. En effet, les capteurs d'éclairement peuvent produire les données sous forme d'une tension de réponse exprimée en volts. Ces données doivent alors être converties en valeurs d'éclairement, exprimées en Lux, à partir de la calibration de la réponse du capteur.

Cette même étape est avantageusement mise en oeuvre pour d'autres capteurs pour lesquels la sortie brute est une tension de réponse exprimée en volts. C'est le cas par exemple du chromamètre, du thermomètre et de l'hygromètre.

Avantageusement, pour plus de précision sur les valeurs calibrées, le procédé comprend aussi une étape de calibration 90 de chaque capteur. Pour les luxmètres, la calibration est de préférence mise en oeuvre avant chaque étape de mesure. Alternativement, pour les autres capteurs, une calibration peut être réalisée avant une série de plusieurs campagnes de mesures et de traitement.

La calibration d'un capteur est réalisée de façon connue en soi en fonction de la nature du capteur concerné. Par exemple, la calibration d'un capteur d'éclairement est réalisée en positionnant un capot sur le capteur pour supprimer la perception de lumière par ce capteur, et en mesurant la réponse du capteur avant le début de chaque campagne de mesure. Le capot est bien entendu retiré ensuite pour pouvoir effectuer les mesures.

Le traitement 200 des données comprend ensuite avantageusement une étape 230 de correction des données, en supprimant les valeurs redondantes et/ou incohérentes. Ceci permet tout à la fois d'améliorer la précision et la fiabilité du rendu, et en plus d'alléger la base de données sur lequel le traitement est mis en oeuvre, ce qui accélère la réalisation des calculs.

Cette étape comprend d'abord la détection 231 des données correspondant à des phases d'arrêt dans le déplacement du système de relevé de données 1. Lors d'une phase d'arrêt, une imprécision du système de géopositionnement peut se traduire dans les données de position en mouvements erratiques de faible amplitude.

Afin de détecter les phases d'arrêt, la vitesse de déplacement du système de relevé de données 1 est calculée, à partir des données de position et de l'horodatage, dans les directions x et y du repère dans lequel les données sont acquises.

Lorsqu'une vitesse est inférieure à un certain seuil préétabli, par exemple 0,5 km/h les données correspondantes sont considérées comme acquises lors d'une phase d'arrêt. Le procédé comprend alors la suppression des données acquises pendant les phases d'arrêt, à savoir à la fois les données de position et les données d'éclairement qui ont été acquises à des moments correspondant aux phases d'arrêt.

L'étape de correction 230 des données comprend également la détection 232 de points incohérents dans les données mesurées par le système de géopositionnement. Pour ce faire, la vitesse du système dans sa direction de progression et la vitesse du système transversalement à sa direction de progression sont mesurées, à partir des données de position du système.

La vitesse transversale est ensuite comparée à la vitesse dans la direction de progression. Si la vitesse transversale excède un certain seuil, par exemple environ de 10 à 30% de la vitesse dans la direction de progression, par exemple 20% de la vitesse dans la direction de progression, les données correspondantes de positionnement sont considérées comme incohérentes. On considère en effet qu'un véhicule ne peut pas se déplacer transversalement à sa direction de progression au-delà d'une certaine vitesse.

Ces points incohérents apparaissent notamment à faible vitesse ou à l'arrêt.

Les données de positionnement considérées comme incohérentes sont supprimées.

Cette étape de correction 230 permet d'alléger le fichier de données avant les traitements ultérieurs.

Le traitement 200 des données comprend ensuite une étape 240 de référencement géographique des mesures des capteurs, notamment des capteurs d'éclairement 10, à partir des données acquises par le système de géopositionnement 11. En d'autres termes, cette étape consiste à attribuer à chaque donnée acquise par un capteur sa position géographique enregistrée par le système de géopositionnement.

Or, comme on l'a indiqué ci-avant, la fréquence d'échantillonnage du système de géopositionnement est différente de celle(s) du ou des capteur(s).

Par conséquent, le référencement géographique comprend d'abord l'interpolation 241 des données acquises à la fréquence la plus basse. Dans notre exemple, ce sont les données du système de géopositionnement qui sont interpolées. Avantageusement, le type d'interpolation mis en oeuvre est une interpolation linéaire.

L'interpolation est réalisée afin d'obtenir un nombre égal de données entre les données des capteurs d'éclairement 10 (et le cas échéant des autres capteurs utilisés) et les données de position. On note sur la figure 2 xᵢ et yᵢ les données du système de géopositionnement interpolées à la fréquence d'échantillonnage du capteur i.

Le référencement géographique comprend ensuite la mise en correspondance 242, au moyen de l'horodatage de chaque donnée, des données d'éclairement et des données de position. La correspondance des temps correspondant à l'acquisition de chaque donnée permet de faire correspondre les données d'éclairement et les données de position.

L'étape de référencement géographique peut être mise en oeuvre pour les données acquises par les différents capteurs d'éclairement 10 s'il y en a plusieurs (dans ce cas elle est répétée autant de fois qu'il y a de capteurs d'éclairement), et également pour chacun des autres capteurs du système de relevé de données (chromamètre, thermomètre, etc.).

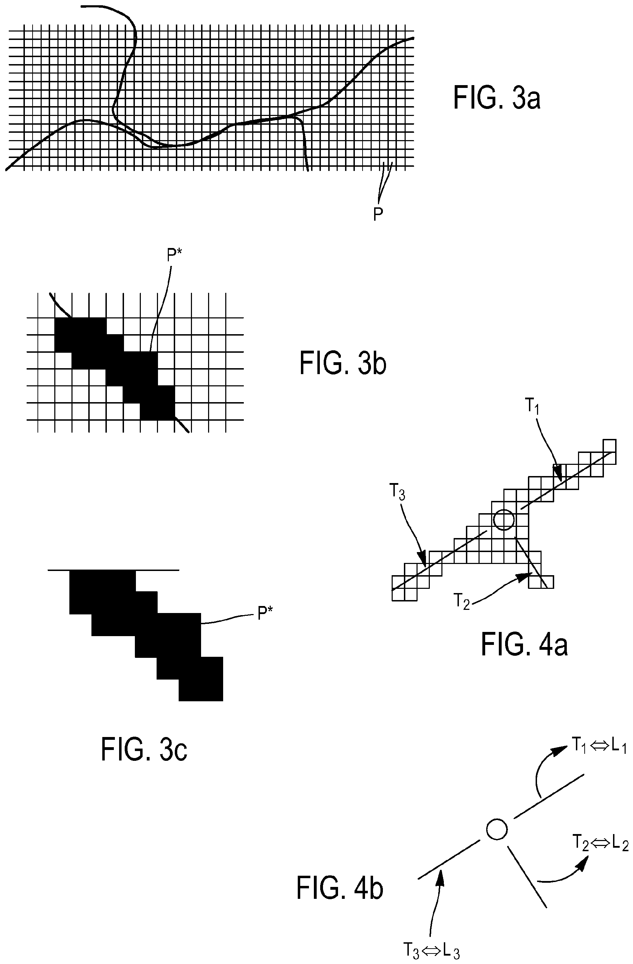

En référence aux figures 3a à 3c, le procédé comprend ensuite une étape de pixellisation 250 des données, c'est-à-dire d'attribution, à chaque donnée mesurée par un capteur, d'un pixel correspondant à une surface élémentaire du site d'étude. Chaque pixel correspond à une zone élémentaire de taille identique et déterminée du site. La taille de la zone élémentaire du site correspondant à un pixel peut être adaptée à la taille du site à étudier. Par exemple, un pixel peut correspondre à une zone d'un mètre de côté du site d'étude.

L'étape de pixellisation des données comprend la génération 251 d'une matrice de pixels p couvrant le site d'étude, c'est-à-dire pour laquelle chaque pixel correspond à une portion de la surface du site d'étude parcouru par le système.

Selon un mode de réalisation, une matrice de pixels peut être générée pour chaque type de capteur dont on souhaite visualiser les données. Par exemple, une première matrice de pixels peut être générée pour le ou les capteurs d'éclairement du système de relevé de données, et une autre peut être générée pour le chromamètre.

Alternativement et de préférence, une unique matrice est générée pour l'ensemble des types de capteurs utilisé, chaque pixel de la matrice comprenant alors une valeur par type de pixel.

Sur la figure 3a, un exemple de matrice de pixels est représenté, et en superposition de cette matrice est également indiqué un exemple de parcours réalisé par le système de relevé de données 1 lors de l'acquisition des mesures.

Ensuite, chaque donnée d'un capteur est mise en correspondance 252 avec un pixel, à partir de ses coordonnées géographiques, c'est-à-dire à partir des données de position correspondantes. Ceci est réalisé en vérifiant, pour chaque donnée L_{i,j} d'un capteur i, à quel pixel correspond la position géographique (x_{i,j}, y_{i,j}) correspondante.

Ensuite, à chaque pixel est attribuée 253 une valeur de synthèse. Cette valeur de synthèse est avantageusement une valeur moyenne de toutes les données d'un même type de capteur, correspondant à un même pixel, y compris par exemple les données relevées lors de passages successifs au même endroit. Par exemple, une valeur d'éclairement moyenne Lᵢ* est attribuée à un pixel comme la moyenne des valeurs d'éclairement relevées dans le pixel.

Cette étape permet donc une moyennisation géographique des valeurs. On comprend en particulier que chaque pixel se voit attribuer une valeur moyenne d'éclairement d'une zone correspondante, à partir de valeurs acquises éventuellement :
- Lors de plusieurs passages du système dans la même zone, et
- Par différents capteurs d'éclairement du système.

On a représenté sur la figure 3b un exemple de matrice de pixels dans lequel les pixels p* auxquels une valeur de synthèse est attribuée sont remplis tandis que les autres sont maintenus vides.

Lorsque la matrice agrège les données de plusieurs types de capteurs, une valeur de synthèse est générée pour chaque type de capteur, et la valeur d'un pixel de la matrice comprend ensuite chacune des valeurs de synthèse générées pour les différents types de capteurs.

Optionnellement, une étape supplémentaire (non représentée) de traitement des valeurs de synthèse des pixels peut être mise en oeuvre pour supprimer des valeurs aberrantes. Cette étape peut par exemple comprendre une moyennisation de valeurs de synthèse, ou un calcul d'écart-type entre un pixel et les pixels voisins avec comparaison de l'écart-type à un seuil palier pour identifier un pixel aberrant, etc. Alternativement, un calcul de dispersion des valeurs des données utilisées pour générer la valeur de synthèse peut également être effectué. En cas de dispersion trop forte entre les valeurs, une alerte peut être déclenchée pour proposer la suppression des valeurs aberrantes. Cette alerte peut être déclenchée sur une interface Homme-Machine de l'unité de traitement établissant le traitement des données, par exemple par l'affichage d'un message ou d'un signal visuel et/ou l'émission d'un signal sonore.

Une valeur aberrante peut ensuite être supprimée du calcul de la valeur de synthèse, cette suppression pouvant être demandée par un opérateur via l'interface Homme-Machine.

Enfin, les pixels auxquels aucune valeur de synthèse n'a été attribuée sont ensuite supprimés (étape 254) pour alléger les données manipulées. Sur la figure 3c, on a représenté l'exemple de matrice de la figure 3b après la suppression des pixels dépourvus de valeur de synthèse.

A l'issue de cette étape 250, on obtient donc une représentation géographique de la zone comprenant, en chaque pixel, une valeur d'éclairement. On peut également disposer de représentations géographiques comprenant d'autres types de valeurs.

Ces valeurs peuvent ensuite être traitées pour obtenir des résultats plus simples à interpréter concernant le site d'étude.

Ainsi, le procédé comprend avantageusement une étape 260 de production d'une cartographie du site d'étude. Cette étape comprend d'abord la superposition 261 d'une matrice obtenue à l'issue de l'étape 250 sur une carte du site d'étude représentant les voies de circulation. Une telle carte est appelée « filaire de voies ». Avantageusement, dans cette carte, les voies sont en outre découpées en tronçons, chaque tronçon étant délimité par deux intersections ou interruptions de la voie. Ce type de carte peut être obtenu auprès d'organismes spécialisés, par exemple l'Institut National de l'Information Géographique et forestière (IGN).

On a représenté dans la figure 4a un exemple de matrice superposée à un filaire de voies composé de trois tronçons T₁, T₂ et T₃ réunis par un rond-point.

Une fois les pixels superposés sur une carte du site d'étude, il est possible de délimiter les pixels appartenant à des tronçons distincts, et donc de calculer au cours d'une étape 262 une moyenne d'éclairement par tronçon, en calculant la moyenne des valeurs de synthèse des pixels appartenant au tronçon. Cette étape est représentée sur la figure 4b dans laquelle une valeur moyenne L₁, L₂, L₃ est attribuée respectivement à chaque tronçon T₁, T₂, T₃.

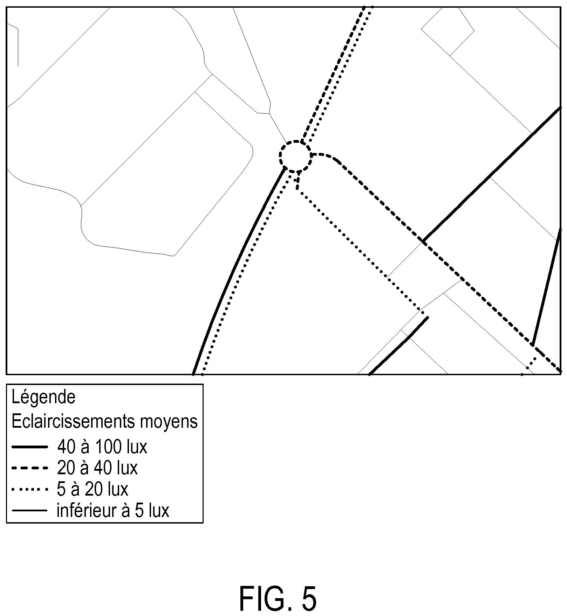

Cette moyenne est avantageusement représentée au cours d'une étape 263 sur une cartographie du site d'étude. Par exemple, chaque tronçon peut être coloré en une couleur correspondant à une gamme d'éclairement, comme dans l'exemple de la figure 5.

Les données traitées étant très détaillées, elles peuvent également être utilisées pour des calculs ou des représentations plus fines de l'éclairement des tronçons. Elles peuvent également servir à constater des défaillances ou des surperformances d'installations lumineuses, ou toute autre application.

## Revendications

1. Procédé de relevé de données photométriques dans un site d'étude, comprenant :
- lors du déplacement dans le site d'un système de relevé de données (1) comprenant au moins un capteur d'éclairement (10), et un système de géopositionnement (11), l'acquisition (100) de données d'éclairement et de position au moyen dudit système de relevé de données, et
le traitement (200) des données mesurées pour produire une information sur l'éclairement dans le site d'étude,
le procédé étant **caractérisé en ce que** les données d'éclairement et les données de position sont acquises, lors du déplacement dans le site, à des fréquences égales aux fréquences d'échantillonnage respectives du capteur d'éclairement (10) et du système de géopositionnement (11),
et **en ce que** le traitement des données (200) comprend
- l'interpolation (241) des données acquises à la fréquence d'échantillonnage la moins élevée parmi ces fréquences d'échantillonnages, pour obtenir des données interpolées à la fréquence d'échantillonnage la plus élevée parmi les fréquences d'échantillonnages, et
- la mise en correspondance (242) des données acquises par le capteur d'éclairement (10) et des données acquises par le système de géopositionnement (11) pour produire une cartographie de l'éclairement du site,
le traitement (200) comprenant en outre, avant l'interpolation (241) :
- une étape (231) d'analyse des données de position pour détecter des phases d'arrêt du déplacement du système de relevé de données (1) lors de l'acquisition des mesures, et supprimer les données de position et d'éclairement correspondant aux phases d'arrêt, et
- une étape de détection de points aberrants (232) par analyse, à partir des données de position, de la vitesse transversale du système par rapport à sa vitesse dans sa direction de progression lors de son déplacement.

2. Procédé de relevé de données photométriques selon la revendication 1, dans lequel les données acquises par le capteur d'éclairement (10) et le système de géopositionnement (11) sont horodatées.

3. Procédé de relevé de données photométriques selon l'une des revendications 1 ou 2, dans lequel le traitement des données (200) comprend en outre, avant l'étape d'interpolation (241), le lissage (210) des données acquises par le capteur d'éclairement (10) par calcul de moyennes glissantes.

4. Procédé de relevé de données photométriques selon l'une des revendications précédentes, comprenant en outre la conversion (220) des données acquises par le capteur d'éclairement (10) en valeurs d'éclairement à partir d'un calibrage préalable dudit capteur d'éclairement.

5. Procédé de relevé de données photométriques selon l'une des revendications précédentes, dans lequel au cours de l'étape de détection de points aberrants (232), on supprime les données de position correspondant aux points aberrants.

6. Procédé de relevé de données photométriques selon l'une des revendications précédentes, comprenant en outre :
- la génération (251) d'une matrice de pixels de taille déterminée, chaque pixel représentant une surface élémentaire du site d'étude, et
- pour chaque donnée acquise par le capteur d'éclairement (10) en une position du site d'étude incluse dans la surface élémentaire représentée par un pixel, la mise en correspondance (252) entre ladite donnée et le pixel correspondant.

7. Procédé de relevé de données photométriques selon la revendication 6, comprenant en outre l'attribution (253) d'une valeur de synthèse à chaque pixel, ladite valeur étant calculée comme la moyenne des valeurs des données d'éclairement obtenues après interpolation pour un même endroit lors de passages successifs, ledit endroit correspondant audit pixel.

8. Procédé de relevé de données photométriques selon la revendication 7, comprenant en outre une étape de superposition (261) de la matrice de pixels à une carte de voies du site d'étude pour obtenir une cartographie de l'éclairement dans le site d'étude.

9. Procédé de relevé de données photométriques selon la revendication 8, dans lequel la carte de voies du site d'étude comprend un ensemble de tronçons de voies définis entre deux intersections, et le procédé comprend en outre une étape de calcul d'une moyenne d'éclairement (262) par tronçon de voie.

10. Procédé de relevé de données photométriques selon l'une des revendications précédentes, dans lequel la fréquence d'échantillonnage du capteur d'éclairement est supérieure à la fréquence d'échantillonnage du système de géopositionnement.

11. Procédé de relevé de données photométriques selon l'une des revendications précédentes, mis en oeuvre par un système de relevé de données (1) comprenant en outre un ou plusieurs capteurs parmi le groupe comprenant :
- un capteur d'éclairement (10),
- un chromamètre (12),
- une caméra (13),
- un thermomètre (14), et
- un hygromètre (15),
dans lequel l'étape d'acquisition (100) comprend en outre l'acquisition de données par le ou les capteurs, et l'étape de traitement (200) comprend l'interpolation de toutes les données acquises à une fréquence d'échantillonnage inférieure à la fréquence d'échantillonnage maximale parmi les capteurs et le système de géopositionnement, pour mettre en correspondance lesdites données avec les données de positionnement.

12. Système de relevé (1) de données photométriques, comprenant au moins un capteur d'éclairement (10), un système de géopositionnement (11) et un processeur (16), le système étant **caractérisé en ce qu'**il est adapté pour mettre en oeuvre le procédé selon l'une des revendications qui précèdent.

## Patentansprüche

1. Verfahren zur Aufnahme von photometrischen Daten an einer Untersuchungsstelle, umfassend:
- bei der Verlagerung an der Stelle eines Datenaufnahmesystems (1), umfassend mindestens einen Beleuchtungssensor (10), und ein Geopositionierungssystem (11), das Erfassen (100) von Beleuchtungs- und Positionsdaten mittels des Datenaufnahmesystems, und
das Verarbeiten (200) der gemessenen Daten, um eine Information über die Beleuchtung an der Untersuchungsstelle zu erzeugen,
wobei das Verfahren **dadurch gekennzeichnet ist, dass** die Beleuchtungsdaten und die Positionsdaten bei der Verlagerung an der Stelle in Frequenzen erfasst werden, die gleich den jeweiligen Abtastfrequenzen des Beleuchtungssensors (10) und des Geopositionierungssystems (11) sind,
und dass die Datenverarbeitung (200) umfasst
- das Interpolieren (241) der in der niedrigsten Abtastfrequenz von diesen Abtastfrequenzen erfassten Daten, um in der höchsten Abtastfrequenz von den Abtastfrequenzen interpolierte Daten zu erhalten, und
- das Abstimmen (242) der von dem Beleuchtungssensor (10) erfassten Daten und der von dem Geopositionierungssystem (11) erfassten Daten, um eine Kartographie der Beleuchtung der Stelle zu erzeugen,
wobei das Verarbeiten (200) ferner umfasst, vor dem Interpolieren (241):
- einen Schritt (231) des Analysierens der Positionsdaten, um Stoppphasen der Verlagerung des Datenaufnahmesystems (1) bei der Erfassung der Messungen zu ermitteln, und um die Positions- und Beleuchtungsdaten zu löschen, die den Stoppphasen entsprechen, und
- einen Schritt des Ermittelns von abnormen Punkten (232) durch Analyse, auf der Basis der Positionsdaten, der transversalen Geschwindigkeit des Systems in Bezug auf seine Geschwindigkeit in seine Fortschrittsrichtung bei seiner Verlagerung.

2. Verfahren zur Aufnahme von photometrischen Daten nach Anspruch 1, wobei die von dem Beleuchtungssensor (10) und dem Geopositionierungssystem (11) erfassten Daten zeitgestempelt werden.

3. Verfahren zur Aufnahme von photometrischen Daten nach einem der Ansprüche 1 oder 2, wobei die Datenverarbeitung (200) ferner, vor dem Interpolierungsschritt (241), das Glätten (210) der von dem Beleuchtungssensor (10) erfassten Daten durch Berechnen von gleitenden Mittelwerten umfasst.

4. Verfahren zur Aufnahme von photometrischen Daten nach einem der vorangehenden Ansprüche, umfassend ferner das Umwandeln (220) der von dem Beleuchtungssensor (10) erfassten Daten in Beleuchtungswerte auf der Basis einer vorherigen Kalibrierung des Beleuchtungssensors.

5. Verfahren zur Aufnahme von photometrischen Daten nach einem der vorangehenden Ansprüche, wobei während des Erfassungsschritts abnormer Punkte (232) die Positionsdaten gelöscht werden, die den abnormen Punkten entsprechen.

6. Verfahren zur Aufnahme von photometrischen Daten nach einem der vorangehenden Ansprüche, umfassend ferner:
- das Erzeugen (251) einer Pixelmatrix bestimmter Größe, wobei jedes Pixel eine elementare Fläche der Untersuchungsstelle darstellt, und
- für jede von dem Beleuchtungssensor (10) an einer Position der Untersuchungsstelle, die in der elementaren Fläche inbegriffen ist, die von einem Pixel dargestellt wird, erfassten Data, das Abstimmen (252) zwischen der Data und dem entsprechenden Pixel.

7. Verfahren zur Aufnahme von photometrischen Daten nach Anspruch 6, umfassend ferner das Zuweisen (253) eines Synthesewerts an jedes Pixel, wobei der Wert als der Mittelwert der Werte der nach Interpolation für dieselbe Stelle bei aufeinanderfolgenden Durchgängen erhaltenen Beleuchtungsdaten berechnet wird, wobei die Stelle dem Pixel entspricht.

8. Verfahren zur Aufnahme von photometrischen Daten nach Anspruch 7, umfassend ferner einen Schritt des Überlagerns (261) der Pixelmatrix über eine Wegekarte der Untersuchungsstelle, um eine Kartographie der Beleuchtung an der Untersuchungsstelle zu erhalten.

9. Verfahren zur Aufnahme von photometrischen Daten nach Anspruch 8, wobei die Wegekarte der Untersuchungsstelle eine Menge von Wegeabschnitten umfasst, die zwischen zwei Schnittpunkten definiert sind, und das Verfahren ferner einen Schritt des Berechnens eines Beleuchtungsmittelwerts (262) je Wegeabschnitt umfasst.

10. Verfahren zur Aufnahme von photometrischen Daten nach einem der vorangehenden Ansprüche, wobei die Abtastfrequenz des Beleuchtungssensors höher als die Abtastfrequenz des Geopositionierungssystems ist.

11. Verfahren zur Aufnahme von photometrischen Daten nach einem der vorangehenden Ansprüche, umgesetzt durch ein Datenaufnahmessystems (1), das ferner einen oder mehrere Sensoren aus der Gruppe umfasst, die umfasst:
- einen Beleuchtungssensor (10),
- ein Chromameter (12),
- eine Kamera (13),
- ein Thermometer (14), und
- ein Hygrometer (15),
wobei der Erfassungsschritt (100) ferner das Erfassen von Daten von dem oder den Sensoren umfasst, und der Verarbeitungsschritt (200) das Interpolieren aller in einer Abtastfrequenz erfassten Daten, die niedriger als die maximale Abtastfrequenz von den Sensoren und dem Geopositionierungssystems ist, umfasst, um die Daten mit den Positionierungsdaten abzustimmen.

12. System zur Aufnahme (1) photometrischer Daten, umfassend mindestens einen Beleuchtungssensor (10), ein Geopositionierungssystem (11) und einen Prozessor (16), wobei das System **dadurch gekennzeichnet ist, dass** es zur Umsetzung des Verfahrens nach einem der vorangehenden Ansprüche geeignet ist.

## Claims

1. A method for recording photometric data in a study site, comprising:
- during displacement in the site of a data-recording system (1) comprising at least one illuminance sensor (10) and a geopositioning system (11), the acquisition (100) of illuminance and position data by means of said data-recording system, and
processing (200) of measured data to produce information on the illuminance in the study site,
the method being **characterized in that** the illuminance data and the position data are acquired, during the displacement in the site, at frequencies equal to respective sampling frequencies of the illuminance sensor (10) and of the geopositioning system (11),
and **in that** the data processing (200) comprises
- interpolation (241) of the data acquired at the lowest sampling frequency among these sampling frequencies to obtain data interpolated at the highest sampling frequency among the sampling frequencies, and
- matching (242) of the data acquired by the illuminance sensor (10) and of the data acquired by the geopositioning system (11) to produce a cartography of the illuminance of the site,
wherein processing (200) further comprises, prior to interpolation (241):
- an analysis step (231) of the position data for detecting stop phases of the displacement of the data-recording system (1) during acquisition of the measurements, and deleting the position and illuminance data corresponding to the stop phases, and
- a detection step of aberrant points (232) by analysis, from the position data, of the transversal speed of the system relative to its speed in its direction of progression during its displacement.

2. The method for recording photometric data according to claim 1, wherein the data acquired by the illuminance sensor (10) and the geopositioning system (11) are time-stamped.

3. The method for recording photometric data according to one of claims 1 or 2, wherein the data processing (200) further comprises, prior to the interpolation step (241), smoothing (210) of the data acquired by the illuminance sensor (10) by calculation of sliding averages.

4. The method for recording photometric data according to one of the preceding claims, further comprising the conversion (220) of the data acquired by the illuminance sensor (10) into illuminance values from prior calibration of said illuminance sensor.

5. The method for recording photometric data according to one of the preceding claims, wherein during the detection step of aberrant points (232) the position data data corresponding to the aberrant points are deleted.

6. The method for recording photometric data according to one of the preceding claims, further comprising:
- generation (251) of a pixel matrix of determined size, each pixel representing an elementary surface of the study site, and
- for each datum acquired by the illuminance sensor (10) at a position of the study site included in the elementary surface represented by a pixel, matching (252) between said datum and the corresponding pixel.

7. The method for recording photometric data according to claim 6, further comprising attribution (253) of a synthesis value to each pixel, said value being calculated as the average of the values of the illuminance data obtained after interpolation for a same zone during successives passages, said zone corresponding to said pixel.

8. The method for recording photometric data according to claim 7, further comprising a superposition step (261) of the pixel matrix on a roadmap of the study site to obtain a cartography of the illuminance in the study site.

9. The method for recording photometric data according to claim 8, wherein the roadmap of the study site comprises a set of road sections defined between two intersections, and the method further comprises a calculation step of an illuminance average (262) per road section.

10. The method for recording photometric data according to one of the preceding claims, wherein the sampling frequency of the illuminance sensor is greater than the sampling frequency of the geopositioning system.

11. The method for recording photometric data according to one of the preceding claims, performed by a data-recording system (1) further comprising one or more sensors among the group comprising:
- an illuminance sensor (10),
- a chromameter (12),
- a camera (13),
- a thermometer (14), and
- a hygrometer (15),
wherein the acquisition step (100) further comprises data acquisition by the sensor(s), and the processing step (200) comprises interpolation of all the data acquired at a sampling frequency less than the maximum sampling frequency among the sensors and the geopositioning system, for matching said data with the positioning data.

12. A photometric data-recording system (1), comprising at least one illuminance sensor (10), a geopositioning system (11) and a processor (16), the system being **characterized in that** it is adapted to perform the method according to one of the preceding claims.
